# EUROPÄISCHE PATENTANMELDUNG

(11) **EP 2 108 831 A1**
(43) Veröffentlichungstag der Anmeldung: **14.10.2009**
(21) Anmeldenummer: 08006961.0
(22) Anmeldetag: 08.04.2008
(51) Int. Cl.: F03D 9/00

(54) **Verfahren und Vorrichtung zur Nutzung alternativer Energiequellen**

(71) Anmelder: Krumm, Michael, 22299 Hamburg (DE)
(72) Erfinder: Krumm, Michael, 22299 Hamburg (DE); Zaworka, Wolfgang, 21564 Reinbek (DE)

(57) **Zusammenfassung**

Es wird eine technische Anlage, ein technisches Verfahren und eine Steuerungslogik vorgestellt, die auf Basis unterschiedlicher, vornehmlich regenerativer, Energiequellen Energienutzern konstant und jederzeit Energie bereitstellt. Ebenso ist es möglich mit Hilfe der vorgestellten Erfindung allgemein eine bestimmte Energiemenge konstant und jederzeit zur Verfügung zu stellen. Die konstante Energiebereitstellung wird erreicht durch die Kombination verschiedener, vornehmlich regenerativer, Energiequellen mit der Speicherung von Energie in Form von potentieller Energie und der in Echtzeit stattfindenden Steuerung der Energiebereitstellung, Energiespeicherung, des Energietransports, der Energienutzung und weiterer Bereiche. Gleichzeitig ist die Steuerung und das in dieser Erfindung vorgestellte Zusammenspiel von Energiebereitstellung, Energietransport, Energiespeicherung, Energienutzung und die Steuerung dieser Faktoren allgemein auf den Umgang mit Energie zu übertragen.

## Beschreibung

Die vorliegende Erfindung betrifft technische Anlagen und Verfahren zur Bereitstellung, Verteilung und Speicherung von nutzbarer und nachgefragter Energie.

Alternative Energiequellen werden immer häufiger in elektrischen Strom und andere Energieformen umgewandelt. Aufgrund aktueller Entwicklungen wird diese Tendenz noch zunehmen. Da alternative Energiequellen jedoch nicht konstant und steuerbar zur Verfügung stehen, müssen Schwankungen der Bereitstellung von Energie durch konventionelle Anlagen zur Bereitstellung von Energie ausgeglichen werden. Ansätze, die Energie aus regenerativen Energiequellen speichern sollen und so Schwankungen in der Produktion ausgleichen, sind entweder schon lange im Einsatz (z.B. Pumpspeicherkraftwerke) oder in Entwicklung bzw. Erprobung (z.B. Speicherung von Energie in Druckbehältern). Aufgrund diverser technischer Gegebenheiten wird heute die Bereitstellung von elektrischem Strom und die Bereitstellung von Wärme dezentral in diversen teils kleinen, teils großen Anlagen realisiert. So werden die unterschiedlichen Vor- und Nachteile der Anlagen genutzt bzw. kompensiert. Die Einteilung in Grundlast-, Mittellast- und Spitzenlastkraftwerke zeigt, dass die Bereitstellung von namentlich elektrischem Strom durch einen dezentralen Ansatz realisiert ist, der über den momentanen gesamt Energiebedarf indirekt gesteuert wird. Interessanterweise findet gewissermaßen eine "chaotische" Netzplanung statt, da die Maxime, dass alle Energienachfrager mit Energie versorgt werden müssen gilt. Zudem ist das Strom-, Fernwärme-, Gas- und Heizölnetz mit teils enormen Transportverlusten behaftet.

Das Patent DE4339402 zeigt ein Verfahren, wie mit Hilfe von Kompressoren und Generatoren die Schwankungen der regenerativen Energiequelle Wind durch die Speicherung von Druckluft sowie den verzögerten Abruf der Energie realisiert werden soll. DE69828082T zeigt ein Verfahren, welches durch die Kombination von vier verschiedenen regenerativen Energiequellen die Energieversorgung konstant sicherstellen will. In der Süddeutschen Zeitung (Ausgabe 43, S. 23, 2008) wurde veröffentlicht, dass RWE plant, Stromzähler die den Verbrauch einzelner Geräte elektronisch messen sollen, großflächig zu testen. Es sind zudem diverse Ansätze bekannt, die entweder zentral oder dezentral alternative Energiequellen nutzen wollen. Zudem hat die Nutzung der geothermischen Energie aufgrund aktueller technischer Entwicklungen sprunghaft an Effizienz gewonnen. Die Firma Nanosolar (www.nanosolar.com) ist ein Beispiel für die sich rasant weiterentwickelnde Solartechnologie. Die Nanotechnologie hat nämlich Einzug in die Solartechnologie gehalten und enorme Effizienzzuwächse ermöglicht.

Durch die vorliegende Erfindung sollen alternative Energiequellen derart genutzt werden, dass mit Hilfe von Wind-, Wasser-, Regen-, Sonnen-, Hubenergie, Erdwärme und Biogas sowie anderen kombinierbaren alternativen Energien nutzbare Energie bereitgestellt wird und direkt durch den Bedarf gesteuert, diese entweder direkt den Nutzern zur Verfügung gestellt oder in geeigneten Formen möglichst mit wenig Verlust gespeichert wird. Zudem soll realisiert werden, dass die Erfindung allein durch die eigenen Kapazitäten konstant nutzbaren elektrischen Strom und andere Energieformen (namentlich Wasser(-druck), Wärme, nutzbares Gas, kinetische Energie) für eine definierte Anzahl von Nutzern in ausreichender Menge jederzeit autark bereitstellen kann und/oder Energieüberschuss bereitstellt. Mit dieser Erfindung werden Transportverluste der jeweiligen Energieformen minimiert, da die Transportwege entsprechend kurz sind. Bei Bedarf ist die Anlage unter passenden Bedingungen beliebig erweiterbar. Zudem ist durch die Steuerung und Datenverarbeitung, die im Rahmen dieser Erfindung geschieht eine wichtige Quelle, um zukünftige Planungen von Energiebedarfen und Energiebereitstellung, sowie Energiespeicherung und vielem mehr zu erleichtern bzw. in einer neuen Qualität erst zu ermöglichen. So kann z.B. die Planung von Energienetzen bzw. allgemein von Energieversorgungsstrukturen mit weit geeigneteren Daten auf Basis von Profildaten erfolgen, die in Echtzeit generiert, validiert und zur Steuerung eingesetzt werden können.

Gemäß der vorliegenden Erfindung wird durch die Kombination diverser alternativer Energiequellen, einer direkt am Bedarf gesteuerten Bereitstellung, Speicherung und einer verzögerten Abrufung von Energie, einer bestimmten Anzahl von Verbrauchern jederzeit konstant nutzbare Energie zur Verfügung gestellt und/oder Überschuss bereitgestellt. Zentral bei dieser Erfindung ist, dass die Anlage in der Lage ist, vollkommen autark von der Umgebung einer definierten Anzahl von Nutzern elektrischen Strom, Wärme, Wasser(-druck), kinetische Energie, nutzbares Gas ständig zur Verfügung zu stellen. Dabei gibt es keine Standardanlage, vielmehr muss die Erfindung je nach Standort angepasst werden. Schließlich sind alternative Energien stark vom jeweiligen Standort abhängig verfügbar. Die Anlage muss somit je nach Standort den Gegebenheiten angepasst werden. So muss der Mix der energiebereitstellenden Anlagen, deren Dimensionierung und Anordnung sowie die Speicherung der Energie jeweils spezifisch standortabhängig angepasst werden. Grundlegend besteht die Anlage aus diversen Anlagen, die alternative Energiequellen wandeln können, um elektrischen Strom, kinetische Energie, Wärme, Wasser(druck) und nutzbares Gas bereitzustellen. Die Grundlage dieser Erfindung ist eine Kombination von Windgeneratoren/Windkrafträdern, Solaranlagen (zur Umwandlung von Sonnenenergie in elektrischen Strom und Wärme), Biogasanlagen, geothermischen Anlagen, Wasserbecken, -turbinen und - pumpen, großflächig verzweigte Dränagesysteme oder Wasserauffangsysteme zum Auffangen von Regenwasser, Hubkraftwerken (analog zu Tidenhubkraftwerken), Wassertürmen, Kurzzeit Stromspeichern und einem Steuersystem, sowie weiteren Elementen zur Bereitstellung von nutzbarer Energie aus alternativen Energiequellen und dessen Speicherung. Mithilfe der Kombination diverser alternativer Energiequellen sowie der langfristigen Speicherung von Überproduktionen in Wassertanks, in geothermischen Speichern etc. wird erreicht, dass an fast jedem Standort diese Erfindung, jeweils abgestimmt auf den Standort, den gesamten Energiebedarf an elektrischem Strom, Wasser(druck), Wärme, mechanischer Energie und nutzbaren Gas jederzeit autark von externen Versorgern zumindest deckt, auf Wunsch aber mehr produzieren kann als verbraucht wird. Somit kann die Anlage unabhängig vom Versorgungsnetz eine definierte Anzahl von Nutzern versorgen. Alle Teile der Anlage (grob also Energiebereitstellung, Speicherung, Nutzung) werden in Echtzeit computergestützt abgestimmt und gesteuert. Dadurch wird erreicht, dass ein Überschuss an Energie (die Anlage produziert also mehr Energie als die Verbraucher tatsächlich verbrauchen) entweder in kurzfristigen Speichern wie Akkumulatoren oder Hochkapazitätskondensatoren gespeichert wird oder (sollte durch die Messung des Energie Bedarfs sowie der Bedarfstendenz deutlich werden, dass der Energieüberschuss derart ist, dass eine langfristige Speicherung effektiver ist) in den unterschiedlichen Wasserbecken bzw. in Wassertürmen oder anderen geeigneten Langzeitspeichern gespeichert wird. Dies hat zur Voraussetzung, dass der Energiebedarf jedes Gerätes (also die jeweilige Verbrauchskurve des Geräts bzw. die Näherung) sowie die Verbrauchsprofile der einzelnen Haushalte/Betriebe in Echtzeit über elektronische Stromzähler gemessen bzw. bei anderen Energieformen auf anderem Wege geeignet gemessen werden und die Daten an die zentrale Datenverarbeitung zur Verarbeitung gesendet werden. Genauso werden die energiebereitstellenden Anlagen, die jeweils über geeignete Messinstrumente zur Erfassung der jeweiligen Energiequelle verfügen, mit der zentralen Datenverarbeitung gekoppelt. Zusätzlich werden die Zustände der Speicherbecken, des Wasserturms, der geothermischen Speicher etc. sowie der kurzfristigen Speicher ständig an die zentrale Datenverarbeitung übermittelt. Geeignete Programme verrechnen ständig die Bereitstellung mit der Speicherung und der Nutzung der unterschiedlichen Energieformen. So wird erreicht, dass jederzeit optimal Energie bereitgestellt, gespeichert wird und vor allem jederzeit ausreichend zur Verfügung steht. Eine Folge hieraus ist, dass die Anlage so konzipiert sein muss, dass die Bereitstellungskapazität, die Speicherkapazität und der Bedarf (auch der Bedarf an Überschuss) optimal aufeinander abgestimmt sind.

Das unten stehende Beispiel soll nur eine mögliche Speicherung der Energie anhand von Wasserbecken und einem Wasserturm zeigen. Es sind auch andere Speicherformen wie z.B. mit Hilfe von Gewichten möglich. Entscheidend ist, dass die "gewonnene" Energie langfristig relativ verlustfrei gespeichert werden kann. Wenn andere Energieformen als elektrischer Strom oder kinetische Energie in potentielle Energie, letztlich die langfristige Speicherform der Anlage, überführt werden soll (z.B. Wärme aus den geothermischen Anlagen) muss diese in entweder elektrischen Strom, kinetische Energie oder andere direkt in die hier vorgestellte Speicherform überführbare Energie umgewandelt werden. Dies ist mit verschiedenen Verfahren, wieder abhängig von der jeweiligen Anlage und somit vom Standort, zu realisieren.

Natürlich muss die produzierte und gespeicherte Energie für den Haushalt und gewerbliche Einrichtungen so umgewandelt werden, dass sie nutzbar wird. Transformatoren, Wärmetauscher, etc. kommen hier zum Einsatz.

Desweiteren ist der Kreislauf der Anlage, also Bereitstellung, Speicherung und Nutzung von Energie, nahezu abgeschlossen und eng gekoppelt. Als Elemente der Anlage gelten hier auch die einzelnen Leitungen und energienutzende Elemente der Haushalte/Bertriebe. Auch die Wärme des Abwassers mit Hilfe von Wärmetauschern wird in den Wärmekreislauf der Anlage überführt, obwohl das Abwasser nicht in dem Kreislauf der Anlage verbleibt sondern in die übliche Kanalisation überführt oder sonst geeignet entsorgt wird. Es ist aber auch denkbar, die Anlage mit einem geschlossenen Trink-Abwasser Kreislauf auszustatten und selbigen im Energiebedarf und in der Energiebereitstellung und -speicherung bei der Konzeption der jeweiligen Anlage zu berücksichtigen. Diese Praxis wird analog mit allen weiteren Energieformen realisiert (z.B. Kühlung der Pumpen mit Hilfe des Heizkreislaufes, Nutzen von Restströmen).

Zur Übergabe von überschüssiger Energie werden Schnittstellen zu den vorhandenen Leitungsnetzen eingerichtet. Diese Schnittstellen können in Notfällen auch zur Versorgung der Anlage mit Energie genutzt werden.

Der Abruf von gespeicherter Energie wird im unten illustrierten Beispiel so realisiert, dass gespeicherte potentielle Energie, hier eine bestimmte Menge Wasser, die bei Energieüberschuss hochgepumpt wurde, über das Ablassen eines Beckens und damit die Bewegung von Turbinen wieder in elektrischen Strom umgewandelt wird. Wie oben schon erwähnt sind auch andere langfristige Speichermöglichkeiten denkbar. Das Hochpumpen des Wassers wird entweder über elektrisch betriebene Pumpen oder mit Hilfe direkt mechanisch gekoppelter Windkraftanlagen realisiert.

Die Anlage kann ebenfalls die Trinkwasserversorgung sicherstellen, sofern eine Wasseraufbereitungsanlage integriert und in der Energiebilanz bzw. bei der Planung der jeweiligen Anlage berücksichtigt wird. Selbst wenn eine solche nicht geplant ist und somit die Anlage an das Trinkwassernetz angeschlossen sein muss, wird der Leitungsdruck des Trinkwasser mit Hilfe eines Wasserturms (sowie handelsüblichen Trinkwasserpumpen) realisiert, der wiederrum über Pumpen und Turbinen an den elektrischen Kreislauf der Anlage angeschlossen ist.

Aus diversen Gründen kann es sinnvoll oder notwendig sein, die Anlage an die allgemeinen Versorgungsnetze zwecks Notversorgung anzuschließen. Wenn die Anlage so konzipiert ist, dass sie mehr produziert, als sie insgesamt verbraucht, sind Anschlüsse sinnvoll, um die überschüssige Energie in die Versorgungsnetze einzuspeisen

Ausführungsformen und Ausführungsbestandteile der vorliegenden Erfindung werden in exemplarischer Weise mit Bezug auf die angehängten Zeichnungen beschrieben, in denen:

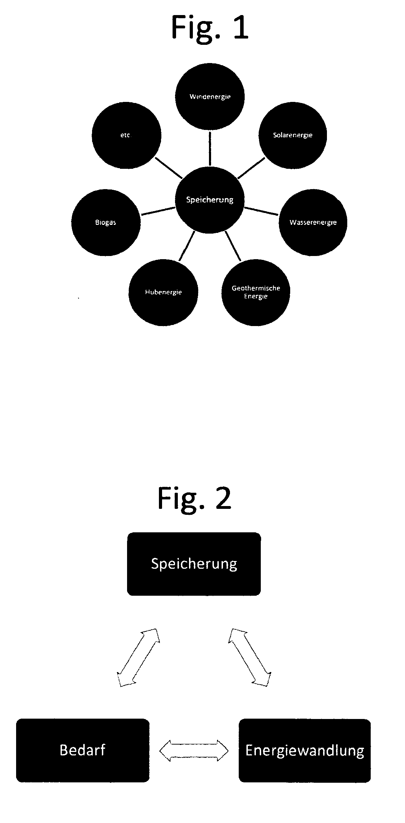

Fig. 1 ein grundlegendes Schema der zentralen Speicherung in geeignete Energieformen ist,
Fig. 2 den Zusammenhang zwischen Speicherung, Produktion und Bedarf ("Verbrauch") darstellt,
Fig. 3 ein Anwendungsbeispiel darstellt, das je nach Bedarf oder technischer Entwicklung abgeändert werden kann oder muss,
Fig. 4 einen Überblick über die Zusammenhänge von Energiebereitstellung, Umwandlung, Speicherung und dem Kreislauf der Anlage bietet, wobei diese Darstellung letztlich unvollständig ist,
Fig. 5 schematisch die Schritte der Steuerung der Anlage zeigt und besonders aktuelle Energiebereitstellung (Energiewandlung) und aktueller Energiebedarf als auch erwartete Energiebereitstellung (erwartete Energiewandlung) und erwarteter Energiebedarf illustriert,
Fig. 6 die Steuerung der Anlage unter einem anderen Blickwinkel schematisch illustriert und
Fig. 7 die schematisch die Erstellung von Energieprofilen, deren weitere Verarbeitung, die grundlegende Verarbeitung der Daten für die unterstützende Qualitätssicherung aller Bestandteile der Anlage, sowie die Datengrundlage für weitere Berechnungen aus erfassten Daten der Anlage illustriert.

Es wird eine Anlage errichtet, die aus energienutzenden, energiespeichernden und energiebereitstellenden Elementen besteht, wobei jeder Bestandteil der Anlage und jedes an den Energiekreis angeschlossenes energienutzende, energiespeichernde, energiebereitstellende Element gemeint ist. Diese Anlage ist so dimensioniert, dass sie an ihrem jeweiligen Standort jederzeit autark von anderen Energieversorgern den eigenen Bedarf mindestens decken kann. Alle Elemente der Anlage, somit jede Leitung, jedes energiebereitstellende Element, jedes Speicherelement und jeder Energienutzer sind miteinander über die jeweiligen Versorgungswege in zwei Richtungen verbunden (alle können sowohl Energie nutzen als auch bereitstellen). Zudem werden alle Elemente der Anlage mit geeigneten elektronischen Messverfahren in ihrem Energiebedarf, ihrem üblichen Verhalten in Bezug auf Energie und ihrer Bereitstellung von Energie von einer zentralen Datenverarbeitung in Echtzeit erfasst und geeignet verrechnet und gesteuert.

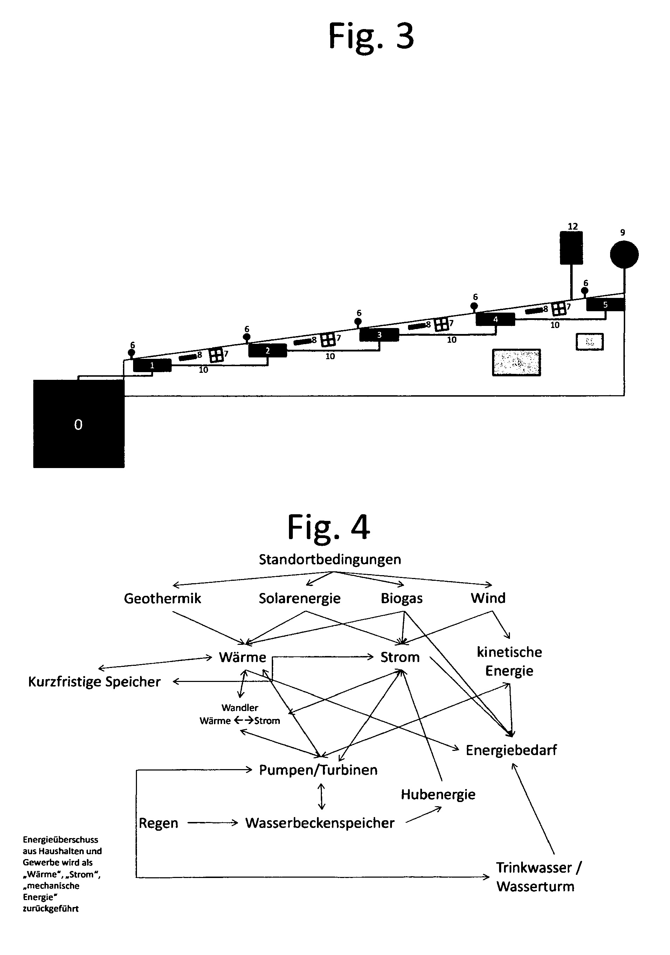

Fig. 3 zeigt eine denkbare Ausführung der Anlage, wobei ein großer Wasserspeicher (z.B. ein See) (0) zur Versorgung der Anlage mit Nutzwasser dient. Aus diesem Speicher (0) werden die Wasserspeicherbecken (1-5) gespeist, die relativ zum Wasserspeicher stufenweise höher liegen. Die Wasserspeicherbecken dienen zur stufenweisen Speicherung von potentieller Energie. Die Wasserspeicherbecken werden zudem über ein großflächiges, vernetztes Dränagesystem/Wasserauffangsystem mit Regenwasser gespeist. In jedem Wasserspeicherbecken sind Hubkraftwerke installiert, die Änderungen der verschiedenen Wasserpegel in elektrischen Strom oder kinetische Energie umwandeln. Die einzelnen Wasserspeicherbecken sind mit Leitungen verbunden (10) wobei jede Leitung mindestens eine Turbine und eine Pumpe beherbergt. Die Leitungen sind so konzipiert, dass das Wasser jedes Beckens direkt in den großen Wasserspeicher (0) abgelassen werden kann, sowie gesteuert in jedes unter dem jeweiligen Becken liegende. Die Füllung und Entleerung der jeweiligen Wasserspeicherbecken kann stufenweise erfolgen, indem Ventile und Ein- bzw. Auslassöffnungen in verschiedenen Höhen der einzelnen Becken positioniert sind. Wenn nun Energieüberschuss vorhanden ist, werden die Pumpen entweder elektrisch aufgrund des Überschuss der Anlage betrieben, um Wasser aus einem niedrigeren in ein höheres Becken zu pumpen (beispielsweise von 1 nach 3) oder die direkt mechanisch koppelbaren kleineren Windkraftanlagen (6) werden zum mechanischen Pumpen von Wasser eingesetzt. Wenn die Anlage Energie benötigt, wird Wasser aus geeigneter Höhe in geeigneter Menge in ein niedrigeres Becken (1-4) oder den großen Wasserspeicher (0) abgelassen und betreibt so mindestens eine Turbine, die wiederrum über einen Generator elektrischen Strom erzeugt, oder mit Hilfe anderer Einrichtungen z.B. kinetische Energie bereitstellt. Dieser Kreislauf wird zusätzlich durch Regenwasser gespeist. Die genaue Steuerung der Abläufe erfolgt, wie oben beschrieben, auf Basis der Echtzeit Energie Bedarfs-, Bereitstellungs- und Speicherdaten mit Hilfe eines zentralen rechnergestützten Verarbeitungssystems (11). Die Pumpen und Turbinen des Wasserkreislaufes sind wiederrum mit dem Wärmekreislauf der Anlage in der Art gekoppelt, dass sie Wärme an selbigen gesteuert abgeben.

Die einzelnen kleinen Windkraftanlagen (6), die in diesem Beispiel bei geringen Windgeschwindigkeiten effektiv sein sollen, sowie die große Windkraftanlage (9) erzeugen bei geeigneten Winden entweder elektrischen Strom, können über mechanische Kopplung als Energiegeber zum Pumpen von Wasser oder allgemein zur Bereitstellung von kinetischer Energie genutzt werden. Wiederrum erfolgt die Steuerung über das zentrale rechnergestützte Verarbeitungssystem in Echtzeit.

Die Solaranlagen (7) bestehen zum einen aus Photovoltaik-Anlagen zum anderen aus Wärmekollektoren. Diese Anlagen produzieren bei geeigneten Bedingungen Strom und Wärme. Der Strom wird entweder kurzfristig in geeigneten Speichern (z.B. Akkumulatoren, Hochkapazitätskondensatoren) gespeichert, zum Betrieb der Pumpen, um Wasser in ein höheres Wasserspeicherbecken zu pumpen eingesetzt oder bei Bedarf direkt an den Energienutzer weitergegeben. Die Wärme wird, je nach Bedarf der Energienutzer ebenfalls entweder in langfristigen oder kurzfristigen Speichern gespeichert. Zudem kann, wenn es sinnvoll ist, Wärme zum Betrieb der Pumpen zur Füllung der Wasserspeicherbecken eingesetzt werden, indem sie in Strom umgewandelt wird oder andere Verfahren eingesetzt werden, die letztlich die Umwandlung von thermischer Energie in Wassertransportleistung umwandeln kann. Die Steuerung dieser Prozesse erfolgt ebenfalls über die zentrale elektronische Datenverarbeitung.

Die geothermischen Anlagen (8) bestehen entweder aus oberflächennahen geothermischen Anlagen oder tiefen geothermischen Anlagen. Hauptsächlich soll die geothermische Energie den Energienutzern Wärme zur Verfügung stellen. Kurz- bzw. mittelfristige Speicheranlagen ergänzen den geothermischen Kreislauf der Gesamtanlage. Wie schon angedeutet werden verschiedene andere Elemente der Anlage wie z.B. die Wasserpumpen so gekühlt, dass die Abwärme ebenfalls in den Heizkreislauf der Anlage eingeht. Eine technische Anlage, die Wärme in Strom und umgekehrt wandeln kann, kann bei Bedarf überschüssige Wärme in Strom umwandeln, damit die Wasserspeicherbecken befühlt werden können und so die überschüssige Energie langfristig gespeichert werden kann. Natürlich kann bei Bedarf so auch Strom produziert werden.

Ein Wasserturm (12) bzw. mehrere Wassertürme werden in die Anlage eingebunden, um den Trinkwasserdruck konstant aufrecht zu erhalten. Die Pumpen zum hoch pumpen des Trinkwassers werden ebenso wie alle sonstigen durch die Anlage mit Energie versorgt. Ebenso ist der Einbau von Turbinen in den Wasserturm bzw. in die Wassertürme denkbar, was diese Wiederrum ähnlich den Wasserspeicherbecken zu erweiterten Energiespeichern machen würde.

Biogasanlagen (13) stellen durch die üblichen Verfahren Strom, Wärme und Gas bereit, die wie weiter unten ausgeführt, in den Kreislauf der Anlage eingespeist werden. Da Biogasanlagen auch nutzbares Gas (chemische Energie) bereitstellen, kann die Anlage zusätzlich mit einem Gasversorgungsnetz ausgestattet werden. Da die Versorgung der Biogasanlage mit Rohstoffen jedoch nicht unbedingt konstant gewährleistet ist, muss die Speicherung von Gas (z.B. durch Gasometer) gewährleistet werden, wobei die sonst üblichen Elemente der Gasversorgung natürlich ebenfalls in der Anlage integriert und in den Energiekreis der Anlage eingebunden werden müssen.

Fig. 4 stellt die obigen Ausführungen nochmal grob schematisch dar. Die Pfeilrichtungen (entweder einseitig oder zweiseitig) bezeichnen die Richtung der Wirkung. Allgemein lässt sich festhalten, dass die Standortbedingungen (also das Wetter, geologische Bedingungen, Abmessungen der Anlage, technische Gegebenheiten etc.) letztlich die Energiequellen beeinflussen (Eigentlich müsste auch die Hubenergie und Regen in der Zeichnung als abhängig vom Standort illustriert sein, aus Gründen der Übersichtlichkeit wurde darauf aber verzichtet). Die mit Hilfe der verschiedenen Energie bereitstellenden Anlagen bereitgestellten Energieformen Wärme, Strom, kinetische Energie und Biogas wird dann entweder den Verbrauchern direkt bereitgestellt, umgewandelt oder ,wie schon beschrieben, gespeichert. Die Darstellung ist nicht erschöpfend sondern soll grundlegende Zusammenhänge verdeutlichen.

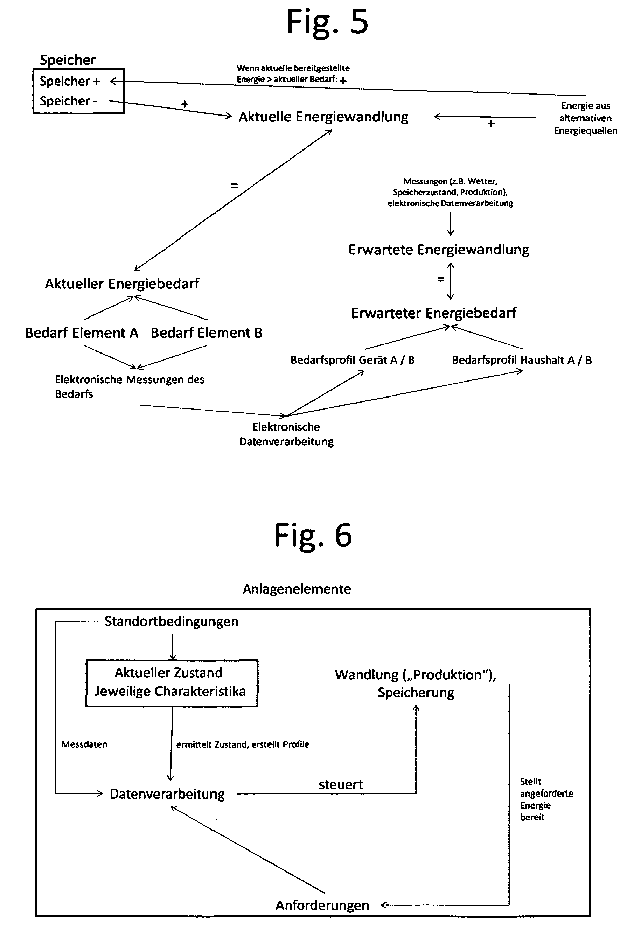

Fig. 5 verdeutlicht, wie die verschiedenen Elemente der Anlage, in diesem Fall unterteilt in Speicher, Wandlung und Nutzung, aufeinander abgestimmt werden, damit die Ziele der Anlage: Autarkie der Energieversorgung und Deckung des Bedarfs zu jeder Zeit erfüllt werden können. Wieder gibt die Pfeilrichtung die Richtung der Wirkung an. Das Symbol "+" bedeutet "desto mehr, umso mehr" sowie "desto weniger, umso weniger". Das Symbol "=" bedeutet "muss gleich sein". "Speicher+" bedeutet, der Speicher, in dem Anwendungsbeispiel also die Wasserbeckenspeicher und die kurz- und mittelfristigen Speicher, wird gefüllt bzw. geladen. "Speicher-" bedeutet, der Speicher wird entleert bzw. entladen, wodurch wiederrum Energie bereitgestellt wird. Die Grafik zeigt, dass die aktuelle Energiewandlung (Bereitstellung von Energie) mit dem aktuellen Energiebedarf übereinstimmen muss und die erwartete Energiewandlung (Bereitstellung von Energie) mit dem erwarteten Energiebedarf. Da die gesamte Anlage über rechnergestützte Systeme verwaltet wird, ist diese Unterteilung essentiell, da die Steuerung der einzelnen Prozesse teils durchaus Zeitspannen benötigt, die größer sind, als dass die Steuerung nur die aktuelle Energiebereitstellung (Energiewandlung) und den aktuellen Energiebedarf berücksichtigen müsste. Vielmehr muss, natürlich auf Daten basierend, geschätzt werden, wie sich der Energiebedarf entwickeln wird. Um die Steuerung mit einer passenden Datenbasis zu versorgen, werden von allen relevanten Teilen der Anlage Daten erfasst und diese geeignet verarbeitet. Zudem werden die für die Anlage relevanten Standortbedingungen (s.o.) erfasst und ständig gemessen. Auf der Seite der Energienutzer (letztlich alle Elemente, die Energie nutzen bzw. die Energie bedürfen) werden alle energienutzenden Teile einzeln in Echtzeit in ihrer Energienutzung gemessen werden (die Anlage ist zudem so konzipiert, dass über das reine Messen der Energienutzung hinaus die Nutzer auch direkt von der Datenverarbeitung gesteuert werden können). Diese Daten werden wiederrum in Echtzeit ständig an die zentrale Datenverarbeitung übermittelt und dort verarbeitet. Da detailierte Energienutzungsverläufe aller Nutzer vorliegen, können statistische Nutzungsprofile (Bedarfsprofile) aller Nutzer erstellt werden. Wenn der aktuelle Energiebedarfs der Nutzer mit den Bedarfsprofilen verrechnet wird, kann der zu erwartende Energiebedarf ermittelt werden (natürlich inklusive eines Sicherheitsaufschlag) und die Anlage so gesteuert werden, dass die Versorgung zu jeder Zeit sichergestellt ist. Die Steuerung betrifft grob hauptsächlich die Bereiche der Energieproduktion und der Energiespeicherverwaltung. Jedoch ist zudem auch eine Steuerung der einzelnen Verbraucher möglich.

Fig. 6 verdeutlicht den Prozess der Steuerung der Anlage und der Interaktion der Datenverarbeitung mit der Steuerung noch weiter. In dieser Darstellung sind mit "Anlagenelemente" alle in der Anlage mit dem Energiekreis verbundenen Elemente gemeint (s.o.). Die Datenverarbeitung und die Steuerung sind im Kasten schematisch dargestellt. Wieder geben die Pfeilrichtungen die Richtung des Einflusses an. Mit "aktueller Zustand, jeweilige Charakteristika" sind die jeweiligen Zustände der verschiedenen Anlagenelemente sowie ihre jeweiligen im Vorfeld bekannten und später durch die Datenverarbeitung ermittelten Charakteristika gemeint.

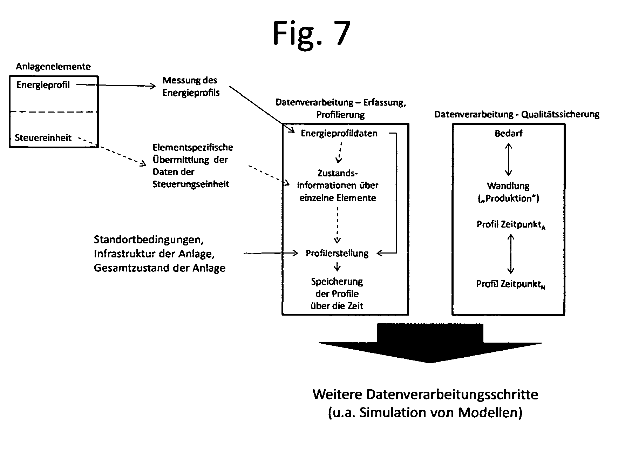

Begriffsdefinition: Energieprofil meint in Fig. 7 sowie im Text sowohl den Bedarf an Energie die Wandlung von Energie aus alternativen Energiequellen in elektrischen Strom, thermische Energie (Wärme), kinetische Energie, nutzbares Gas (chemische Energie) sowie andere nachgefragte Energieformen. Fig. 7 verdeutlicht einen Teil der Datenverarbeitungslogik und der damit zusammenhängenden Struktur. Die Energieprofile der "Anlagenelemente" (also alle jene Bestandteile der vorgestellten Erfindung sowie alle weiteren Elemente, die an das Versorgungssystem (Energiekreis) angeschlossen sind, unabhängig von der jeweilig genutzten, gespeicherten oder produzierten Energieform) werden grundsätzlich immer von der Anlage mit Hilfe geeigneter Messverfahren mindestens kumulativ, bestenfalls einzeln erfasst. So wird z.B. die Bereitstellung von elektrischem Strom einer Windkraftanlage, sowie der Bedarf selbiger an elektrischem Strom über elektronische Stromzähler erfasst, die ihre jeweiligen aktuellen Messdaten regelmäßig an die zentrale Datenverarbeitung (Fig. 3, 11) senden (genauso wird mit jedem anderen Element verfahren, wobei natürlich die jeweilige Messung des Energiebedarfs, der Energiewandlung, -bereitstellung und -speicherung von den in der Anlage auftretenden Energieformen mit Hilfe geeigneter Verfahren erfolgt). Die Messdaten speichert die zentrale Datenverarbeitung als "Energieprofildaten". Zudem werden, wenn ein Steuerungssystem für das jeweilige Element vorhanden ist, mit Hilfe geeigneter Verfahren (z.B. per Transport der Daten über Ethernet oder die Stromleitung) die Steuerungsdaten an die Datenverarbeitung übertragen. Wenn keine Steuerungsdaten vorliegen, wird mit Hilfe diverser mathematischer Verfahren (insbesondere Verarbeitung der Messdaten unter Kenntnis der Infrastruktur der Anlage, ihres Gesamtzustandes sowie weiterer, die Standortbedingungen (Wetter etc.) erfassende Messungen; Fourier-Transformation etc.) ein Energieprofil derart errechnet, dass es möglichst exakt einem oder mehreren Elementen zugeordnet werden kann. Hier muss betont werden, dass auch der Energiekreis selbst als Element zu verstehen ist. Wenn Steuerungsdaten vorliegen, kann die Zuordnung von Energieprofilen zu bestimmten Elemente sehr exakt erfolgen, da unter Zuhilfenahme der obigen Verfahren noch der Zeitpunkt des Energiebedarfs und Energiewandlung (umgangssprachlich "Energieproduktion") bekannt ist. Die so gewonnenen Profile werden über die Zeit kontinuierlich gespeichert und für die weitere Verarbeitung vorgehalten. Im Rahmen der Qualitätssicherung aller Anlagenelemente wird nun für jedes einzeln aufgrund der erstellten Energieprofile abgrenzbares Element (was bedeutet, dass es aufgrund der vorgestellten Verfahren schlechterdings nur mathematisch abgrenzbar, im besten Falle jedoch als reales Element abgrenzbar ist) ständig einer Analyse der Veränderung der Energieprofile über die Zeit angestellt (Profil Zeitpunkt_{A}, Zeitpunkt_{N}). Signifikante Veränderungen können so von der Anlage registriert werden. Genauso wird ständig die Energiewandlung (umgangssprachlich "Produktion") und der Energiebedarf elementspezifisch ("elementspezifisch" im vorigen Sinne) analysiert. Aufgrund der Kenntnis der einzelnen Energieprofile kann eine genaue Steuerung der Anlage erfolgen, da die einzelnen Elemente in ihren Energieprofilen aufeinander abgestimmt werden können. Eine weitere Folge von diversen Folgen dieser Organisation ist, dass auf Basis der hier vorgestellten produzierten Daten Modelle erstellt werden können, die Simulationen von diversen Konstellationen unterschiedlicher Elemente ermöglichen. Gleichzeitig ist es auch möglich, das die energiebereitstellenden Elemente der Anlage aufgrund ihrer jeweiligen Profile und Charakteristika passend (ob im Verbund mit anderen Elementen oder alleinig) Energienutzern zugewiesen werden. Solche Zuweisungen erlauben die effektive Steuerung des Bereitstellungsablaufs aufgrund der direkt zugeordneten Bedarfsprofile.

## Patentansprüche

1. Hochgradig anpassbares Verfahren und hochgradig anpassbare Anlage zur gesteuerten Gewinnung, Speicherung und verzögertem Abruf von nutzbarer Energie aus alternativen Energiequellen, zur Herstellung von Versorgungsautarkie in den Bereichen elektrischer Strom, Wärme, kinetische Energie, Trinkwasserversorgung und Gas (chemische Energie) für eine bestimmte Anzahl von Verbrauchern und/oder zur Bereitstellung einer definierten Energiemenge für Anlagenexterne umfassend:
eine technische Anlage, die durch die in Echtzeit gesteuerte Wandlung von Energie aus alternativen Energiequellen (Fig. 3; 6, 7, 8, 9, 12, 13, sowie weitere) in nachgefragte Energieformen (elektrischer Strom, thermische Energie, kinetische Energie, Wasserdruck, Gas (chemische Energie) und Energiespeicherung den Verbrauch einer begrenzten Anzahl von an das Steuer- (11) und Verteilungssystem der Anlage angeschlossenen Verbrauchern deckt und/oder nicht anlageninternen Abnehmern Energie bereitstellt,
**gekennzeichnet durch** den kombinierten, in Echtzeit gesteuerten, an den Standort, an die Standortbedingungen und den Bedarf angepassten Einsatz von technischen Anlagen zur Wandlung von alternativen Energiequellen in elektrischen Strom, thermische Energie, kinetische Energie, Wasserdruck und Gas (chemische Energie) und der direkt am Bedarf an Energie und der Wandlung ("Produktion") der Energie orientierten Speicherung von Energie in Form von potentieller Energie, wobei auch Kurzzeitspeicher eingesetzt werden. Die Anlage ist so konzipiert, dass die definierte Anzahl der angeschlossenen Energienutzer oder eine jeweils zu definierende Energiemenge von der Anlage unabhängig von einer externen Versorgung mit Energie (Strom, Wärme, kinetische Energie, Wasserdruck, Gas) konstant und jederzeit, wobei höhere Gewalt ausgeschlossen ist und keine absolute Ausfallsicherheit besteht, versorgt werden können bzw. die definierte Menge bereitgestellt werden kann. Die Anlage kann nach Belieben erweitert werden. Zudem müssen nicht immer alle Energieformen bereitgestellt werden und nicht alle alternativen Energiequellen genutzt werden. Genauso können auch mehr der hier genannten Energieformen sowie mehr der hier genannten alternativen Energiequellen genutzt werden;
**gekennzeichnet durch** eine Steuerung und Datenverarbeitung, die mit Hilfe von umfassender Datensammlung, -validierung und -verarbeitung Energieprofile aller in den Versorgungskreis der Anlage angeschlossenen Elemente erstellt und diese laufend validiert und anpasst, indem sie mit den in Echtzeit erfassten Messdaten der einzelnen Sensoren, sowie der allgemeinen Daten, abgeglichen werden und anhand der gewonnenen Daten die Anlage steuert, sowie automatisch die wirtschaftliche Verrechnung des Energiebedarfs und der Energiebreitstellung vornimmt. Gleichzeitig werden die **durch** die Datenverarbeitung gewonnenen Profile genutzt, um Zuordnungen zwischen energiebereitstellenden Elementen und energienutzenden Elementen vorzunehmen;
**gekennzeichnet durch** die gesteuerte Rückführung der Abwasserwärme **durch** Wärmetauscher in den Wärmekreislauf der Anlage.

2. Energiebereitstellung gemäß Anspruch 1.

3. Steuerung und Datenverarbeitung gemäß Anspruch 1.

4. Echtzeit Abrechnung (inklusive elektronischer Zahlungsverkehr, insbesondere, aber nicht begrenzt auf Lastschriftverfahren) von Energienutzung/-transport/-bereitstellung/-speicherung mithilfe der in Anspruch 1 und in dieser Patentschrift selbst vorgestellten Anlage und Verfahren.

5. Anwendung der hier vorgestellten Erfindung, erweitert auf nichtalternative Energien und das gesamtes Versorgungsnetz in jeder Form und jeder Größe.

6. Anwendung der hier vorgestellten Erfindung für alle Energieformen.

7. Anwendung der hier vorgestellten Erfindung für jede Kombination von Energieformen.

8. Steuerung und Datenverarbeitung von Systemen, in der in dieser Patentschrift dargestellten Form.

9. Direkte sowie indirekte Zuordnung (ob im Verbund mit anderen oder einzeln) von energiebereitstellenden Anlagen mit energienutzenden Anlagen zwecks Steuerung der Energiebereitstellung, der Energienutzung, der Energiespeicherung und des Energietransports mit Hilfe der in dieser Patentschrift vorgestellten Datenverarbeitung und Steuerung. Die Steuerung kann über alle vier hier genannten Bereiche erfolgen (Energiebereitstellung, -nutzung, - speicherung, -transport) sowie über jede Kombination mit Auslassung eines Bereichs oder mehrerer Bereiche. Dieses Verfahren ist auf alle Energieformen, -quellen, - bereitstellungsverfahren, -nutzungen, -speicherungen und -transport anwendbar.
